# FASCICULE DE BREVET EUROPEEN

(11) **EP 0 401 456 B1**
(45) Date de publication et mention de la délivrance du brevet: **04.08.1993**
(21) Numéro de dépôt: 89830246.8
(22) Date de dépôt: 05.06.1989
(51) Int. Cl.: A47J 31/30

(54) **Machine pour préparer des infusions de café avec dosage automatique de poudre et d'eau**
Maschine zum Zubereiten von Kaffeebrühe mit automatischer Pulver- und Wasserdosierung
Machine for making coffee with automatic dosage of powder and water

(43) Date de publication de la demande: 12.12.1990
(73) Titulaire: Fibbi, Giovanni, I-50122 Firenze (IT)
(72) Inventeur: Fibbi, Giovanni, I-50122 Firenze (IT)
(74) Mandataire: Manzoni, Alessandro

(56) Documents cités:
- BE-A- 693 676
- CH-A- 355 273
- FR-A- 701 376
- FR-E- 75 336
- US-A- 4 498 375

## Description

L'invention concern une machine pour préparer une infusion de café comprenant une chaudière, une cafetière superposable à la chaudière, et ayant un conduit partant de la base de la cafetière pour décharger l'infusion, et un récipient avec un fond à filtre et avec un paroi cylindrique propre à contenir la poudre de café et avec un conduit de passage puisant dans la chaudière, le dit récipient étant engagé entre chaudière et cafetière pour la formation de l'infusion, le fond à filtre etant réglable en position le long de la paroi cylindrique (10A) du récipient (3) pour régler la quantité de la poudre de café. Une machine pour la production de café de ce type et corréspondante au préambule de la revendication 1 est connu par CH-A-353 273.

Est toutefois but de l'invention celui de prévoir une machine pour la production de café qui présente des moyens par lesquels il y ait la possibilité de régler la quantité de poudre de café employée et dans le même temps la quantité d'eau qui peut passer de la chaudière à la cafetière à travers la poudre de café. Pour ça l'invention concerne une machine pour la production de café selon le préambule de la revendication 1 et caractérisée en ce que le fond à filtre est solidaire d'un raccord conique que rattache ledit fond a un conduit de passage dont la position en hauteur dans la chaudière permet un réglage correspondant de la quantité de liquide poussée dans la conduite par la pression existant dans la chaudière.

En pratique, ledit conduit, solidaire du fond à filtre a travers ledit raccord conique, est guidée dans un siège d'écoulement solidaire du fond du dit récipient, ce siége ayant des défenestrages pour le passage du liquide et des moyens d'engagement pour régler la position du conduit dans la chaudière.

Le récipient avec son siégé d'écoulement pour le conduit de passage s'engage avec une ressort qui, en réagissant sur le fond de la chaudière, pousse le récipient, en favorisant la sortie du filtre.

En outre, la mobilité du fond à filtre permet l'ejection automatique de la poudre employée, en poussant le mecanisme de dosage de la poudre.

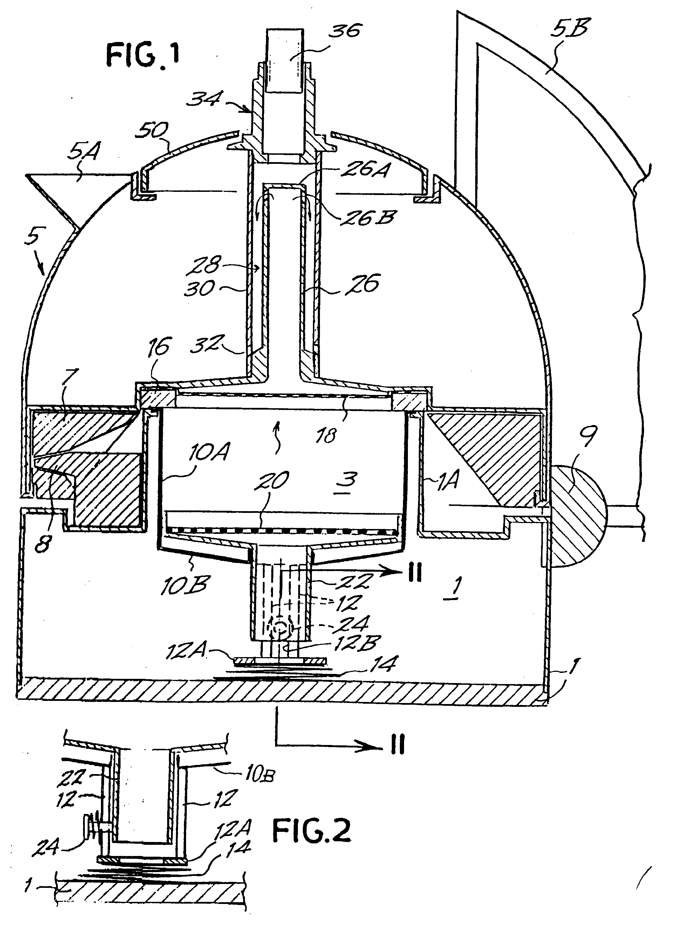

L'invention sera mieux comprise en suivant la description et le dessin annexé, lequel illustre par des exemples pratiques et non limitatifs l'invention même. Dans le dessin: la
Fig.1 est une section verticale d'une cafetière selon l'invention, et la
Fig.2 est une vue et section selon II-II de la Fig.1.

Selon ce qui est illustré dans le dessin annexé, par 1 est indiquée une chaudière dont la bouche 1A est susceptible d'être fermée par la présence d'un récipient à filtre 3 pour la poudre de café. Par 5 est indiquée la véritable cafetière qui est susceptible d'être appuyée sur la chaudière 1 et engagée à elle par un système de greffe indiqué par 7, 8, 9, les sièges (7) étant formés de la cafetière et les ailettes 8 étant solidaires de la chaudière. La partie 1A de la chaudière accueille en particulier un récipient avec une paroi latérale 10A cylindrique, propre à définir latéralement la pièce 3 pour la poudre; la paroi 10A par un raccord conique 10B se combine avec un groupe de trois colonnes verticales inférieures 12 et avec une bague 12A fatiguée -à machine montée- par un petit ressort 14 réagissant sur le fond de la chaudière 1; le ressort 14 favorise l'extraction de l'ensemble 10, 12 de la chaudière. La paroi 10A présente dans la partie supérieure une lévre avec garniture 16 qui est serrée entre la paroi 1A de la chaudière et le fond 5B de la cafetière 5, par l'interposition d'un petit desque troué 18, qui délimite dans la partie supérieure la pièce 3 du récipient à filtre de la poudre de café. A l'intérieur de la pièce 3 peut se déplacer un bout criblé 20, qui fait substantielle étanchéité avec la paroi 10A et qui est solidaire d'une conduite 22; cette conduite 22 glisse en longue-vue dans la colonne 12 solidaire de la pièce 10A, 10B; immédiatement sous le bout criblé 20, la conduite 22 présente des trous 23 pour le passage de l'eau. L'ensemble 20, 22 peut être déplacé verticalement par rapport à l'ensemble 10A, 10B, 12 à travers un système de bloc, indiqué en termes très généraux par 24, qui peut être constitué par un pieu élastique propre à être manoeuvré pour glisser le long d'une fente 12B entre les colonnes 12, pour atteindre l'un ou l'autre de plusieurs sièges de positionnement de la conduite 22 par rapport aux colonnes 12 et là le retenir. Cette disposition consent de régler la quantité de poudre de café qui peut être contenue dans la cavité définie par la pièce 3 et par la paroi criblée 20; en même temps est réglés aussi de cette façon la quantité d'eau qui peut être faite soulever par la pression de chaudière à travers la masse de poudre de café, par l'ebullition provoquée dans la chaudière. En effet, en réglant l'équipage 20, 22 par rapport à l'ensemble 10A, 10B, 12, se détermine une variation de la capacité de retenue de la poudre de café dans la pièce 3. En même temps, à machine montée, on varie la distance de l'extrémité inférieure de la conduite 22 du fond de la chaudière; par conséquent, à machine montée et ayant systématiquement rempli la chaudière jusqu'à un niveau convenablement prévu et indiqué, la quantité d'eau, qui est poussée par la pression de la chaudière à travers la conduite 22 pour atteindre la paroi 20 et traverser la masse de poudre de café, dépend de la position du bord inférieur de la conduite 22. A remplissage constant de la chaudière, le plus de distance de l'extrémité inférieure de la conduite 22 du fond de la chaudière empêche la remontée de l'eau qui se trouve au-dessous du niveau atteint par cette extrémité et, par conséquent, en réduisant la quantité de poudre par le levage de la paroi 20 est réduite aussi la quantité d'eau qui par l'ébullition est faite passer à travers la charge de poudre. Avec au moins deux ou trois positions de l'équipage 20, 22 par rapport à l'ensemble 10A, 10B 12, on peut doser la quantité de mélange et la quantité d'eau qui est faite remonter à travers la poudre pour avoir une proportionnalité entre la quantité de poudre et d'eau et, par conséquent, de l'infusion qui est formée. La machine, donc, peut être réglée pour un nombre de "tasses" de café selon les exigences, à travers le positionnement de la paroi 20.

Afin d'assurer le passage de l'eau de la chaudière vers la paroi 20, seront prévus des défenestrages longitudinaux appropriés 12B dans la colonne tubulaire 12 ainsi que les trous 23 pour le passage de l'eau de l'intérieur de la conduite 22 jusqu'au-dessous de la paroi criblée 20 du filtre; de cette façon l'eau qui remonte par effet de la pression dans la chaudière atteint l'espace entre la paroi 10B et la paroi criblée 20 pour pénétrer uniformément à travers la poudre de café contenue entre la paroi 10A, la paroi 20 et la 18.

L'infusion de café, qui est formée par la montée de l'eau à travers la conduite 22, la paroi 20, la masse de poudre de café et la paroi criblée 18, remonte dans une conduite 26 montée sur le fond de la cafetière et se développant dans la cavité de la cafetière 5; cette conduite 26 est fermée dans la partie supérieure en 26A et présente des ouvertures latérales 26B, à travers lesquelles l'infusion est déchargée par la pression exercée à travers la chaudière pour atteindre la cavité de la cafetière 5.

Au lieu de déboucher directement dans la cafetière 5, d'après ce qui est illustré dans le dessin, les trous 26B débouchent dans un interstice 28 à siphon qui est défini à l'exterieur de la conduite 26 entre celle-ci et une paroi cylindrique 30, qui est elle aussi solidaire du fond de la cafetière et présentant dans la partie inférieure des orifices 32 de communication avec la cafetière. Un system à siphon se crée ainsi entre la conduite 26 et la cafetière même à travers l'interstice 28 et les passages 32.

Au bout supérieur de la paroi cuylindrique 30 est branché un corps 34, qui contient un sifflet 36; ce siffles reste muet jusqu'au moment où de la conduite 26 remonte une phase liquide c'est-à dire l'infusion qui se décharge à travers le siphon représenté par l'interstice 28; lorsque le niveau de l'eau dans la chaudière 1 baisse au-dessous du bord inférieur de la conduite 22, cesse la poussée d'eau à travers la charge de poudre du filtre et à travers la conduite 26 et commerce la fuite de vapeur qui se trouve au-dessus de la surface libre de l'eau dans la chaudière même; la vapeur se décharge à travers le sifflet 36, car se crée une surpression (qui consent la sortie de la vapeur à travers le sifflet 36) par effet du battant hydraulique qui se forme entre la cafetière et l'interstice 28, où le niveau liquide peut baisser jusqu'aux trous 32 en créant justement la surpression consentant l'issue de la vapeur et, par conséquent, l'actionnement du sifflet. Par cela on obtient un signal acoustique indiquant l'achèvement de la formation de l'infusion. Le signal acoustique peut se prolonger pendant un temps remarquable aussi, par la présence d'un résidu d'eau dans la chaudière et, donc, d'une suite de la formation de vapeur jusqu'à l'intervention de l'operateur.

La cafetière 5 présente un bec 5A et un manche 5B et sur elle peut être appliqué un couvercle 50 qui entoure aussi le corps 34 du sifflet 36.

Il va sans dire que le dessin ne montre qu'une illustration des exemples, donnée seulement comme une démostration pratique de l'invention, car celle-ci peut varier dans les formes et dans les dispositions. Par exemple, la formation du siphon, au lieu d'être réalisée avec un interstice 28 autour de la conduite, peut être faite d'une autre façon à l'intérieur de la cafetière 5.

## Revendications

1. Une machine pour préparer une infusion de café comprenant une chaudière (1), une cafetière (5) superposable à la chaudière et ayant un conduit (26) partant de la base de la cafetière pour décharger l'infusion, et un récipient (3) avec un fond à filtre (20) et avec un paroi cylindrique (10A) propre à contenir la poudre de café et avec un produit de passage puisant dans la chaudière, le dit récipient ètant engagé entre chaudière et cafetière pour la formation de l'infusion, caractérisé en ce que le fond à filtre (20) est réglable en position le long de la paroi cylindrique (10A) du récipient (3) pour régler la quantité de la poudre de café, et en ce que le fond à filtre (20) est solidaire d'un raccord conique qui rattache ledit fond a un conduit de passage (22) dont la position en hauteur dans la chaudière permet un réglage correspondant de la quantité de liquide poussée dans la conduite par la pression existant dans la chaudière.

2. Machine selon la revendication 1, caractérisé en ce que ledit conduit (22), solidaire du fond à filtre (20) a travers ledit raccord conique est guidée dans un siège d'écoulement (12) solidaire du fond (10B) du dit récipient (3), ce siége (12) ayant des défenestrages (12B) pour le passage du liquide et des moyens d'engagement (24) pour régler la position du conduit (22) dans la chaudière.

3. Machine selon la revendication 1 et 2, caractérisée en ce que le récipient (3) avec son siége (12) d'écoulement pour le conduit de passage (22) s'engage avec une ressort (14) qui, en réagissant sur le fond de la chaudière, pousse le récipient, en favorisant la sortie du filtre.

4. Machine selon les revendications précédentes, caractérisée en ce que la mobilité du fond à filtre (20) permet l'éjection automatique de la poudre employée, en poussant le mecanisme de dosage de la poudre.

5. Un accessoire pour machine à café du type indiqué dans le préambule de la revendication 1, comprenant un récipient (3) pour la poudre à café avec un fond à filtre (20) qui est réglable dans la cavité du récipient et est solidaire d'un raccord conique qui rattache ledit fond a un conduit de passage (22) dont la position en hauteur dans la chaudière permet un réglage correspondant de la quantité de liquide poussée dans la conduite par la pression existant dans la chaudière.

## Claims

1. A machine to prepare a coffee infusion including a boiler (1), a coffee pot (5) to be put on the boiler and provided with a conduit (26) which starts from the coffee pot bottom for the infusion discharge, and a vessell (3) with a bottom filter and with a cylindrical wall (10A) suitable to contain the ground coffee and with a flow conduit drawing water from the boiler, said vessell being fitted between the boiler and the coffee pot to make the infusion, characterized in that the bottom filter (20) is adjustable in height along the cylindrical wall (10A) of the vessell (3) to adjust the quantity of the ground coffee, and in that the bottom filter (20) is firmly joined to a conical connection linking said bottom to a flow conduit (22) the position in height of which along the boiler allows to adjust the corresponding quantity of liquid pulled into the conduit by the pressure in the boiler.

2. A machine as claimed in claim 1, characterized in that said flow conduit (22), which is firmly joined to the bottom filter (20) through said conical connection, is guided into a discharge housing (12) firmly joined to the bottom (10B) of said vessel (3), this housing (12) being provided with openings (12B) for the liquid to get out and means of linkage (24) to adjust the position of said conduit (22) in the boiler.

3. A machine as claimed in claims 1 and 2, characterized in that the vessel (3) with its exit housing (12) for the flow conduit (22) is fitted to a spring (14) which, by pushing on the boiler bottom, pulls the vessel and enables the bottom filter to come out.

4. A machine as claimed in the previous claims, characterized in that the bottom filter (20) mobility allows to eject automatically the used ground coffee, by pushing the dosage device.

5. A coffee machine fitting of the type disclosed in the preamble of claim 1, including a vessell (3) for the ground coffee with a bottom filter (20) which is adjustable in the hollow vessel and is firmly joined to a conical connection linking said bottom filter to a flow conduit (22) the position of which along the boiler allows to adjust the corresponding quantity of liquid pulled into the flow conduit by the pressure in the boiler.

## Patentansprüche

1. Maschine für die Zubereitung von Filterkaffee mit einem kesselartigen Behälter (1), einer auf dem Kessel aufsetzbaren Kaffeemaschine (5), die ein vom Boden derselben ausgehendes für den Ablauf des Kaffees bestimmtes Rohr (26) und ein mit einem Filterboden (20) und mit einer Kaffeepulver aufnehmenden zylindrischen Wand (10a) versehenes Gefäß sowie ein in den kesselartigen Behälter eintauchendes Rohr besitzt, wobei das oben genannte Gefäß zwischen dem kesselartigen Behälter und der Kaffeemaschine für die Kaffeeherstellung angebracht ist, dadurch gekennzeichnet, daß der Filterboden (20) entlang der zylindrischen Wand (10A) des Gefässes (3) einstellbar ist, um die Menge des Kaffeepulvers zu dosieren, und daß der Filterboden (20) mit einer kegeligen Leitung verbunden ist, die diesen Filterboden mit einem Rohr (22) verbindet, dessen STellung in Höhenrichtung im Kessel eingestellt werden kann, um eine entsprechende Regelung der Menge von Flüssigkeit, die durch den Druck im Kessel in das Rohr gepreßt wird, zu ermöglichen.

2. Maschine nach Anspruch 1, dadurch gekennzeichnet, daß die durch das obengenannte mit dem Filterboden (20) verbundene kegelige Rohr (22) in einen mit dem Boden dieses Gefässes (3) verbundenen Ablauf (12) geführt ist, der Löcher (12 B) für den Durchtritt der Flüssigkeit und Kupplungsvorrichtungen (24) zur Bestimmung der Rohrstellung (22) im Kessel hat.

3. Maschine nach den Ansprüchen 1 und 2, dadurch gekennzeichnet, daß das Gefäß (3) mit seinem Ablaufbehälter für das Rohr (22) mit einer Feder (14) eingreift, die durch Einwirkung auf den Boden des Kessels auf das Gefäß drückt, um so den Ausgang des Filters zu ermöglichen.

4. Maschine nach den oben genannten Ansprüchen, dadurch gekennzeichnet, daß die Beweglichkeit des Filterbodens (20) das automatische Auswerfen des gebrauchten Pulvers durch den Druck auf die Dosiervorrichtung des Pulvers ermöglicht.

5. Ein Zubehör für die Kaffeemaschine, wie in der Einführung des Anspruches 1 beschrieben, die ein Gefäß (3) für das Kaffeepulver mit einem im Behälter einstellbaren Filterboden (20) enthält, ist mit einem kegeligen Anschluß verbunden, der diesen Boden mit einer Leitung (22) verbindet, deren Einstellung in Höhenrichtung in dem kesselartigen Behälter eine entsprechende Einstellung der in das Rohr durch den Druck im Kessel gedrückten Menge der Flüssigkeit ermöglicht.
